# EUROPEAN PATENT SPECIFICATION

(11) **EP 1 778 003 B1**
(45) Date of publication and mention of the grant of the patent: **23.07.2008**
(21) Application number: 04770749.2
(22) Date of filing: 06.08.2004
(51) Int. Cl.: A01G 25/00

(54) **EXTENSIBLE SUPPORT FOR THE CONNECTION BETWEEN UNDERGROUND PIPELINES AND SURFACE IRRIGATORS OF IRRIGATION SYSTEMS**
VERLÄNGERBARE STÜTZE ZUR VERBINDUNG VON UNTERIRDISCHEN RÖHREN MIT OBERIRDISCHEN BEWÄSSERUNGSEINRICHTUNGEN
SUPPORT DEPLOYABLE POUR UNE CONNEXION ENTRE DES CANALISATIONS SOUTERRAINES ET DES ARROSEURS DE SURFACES DES SYSTEMES D'IRRIGATION

(43) Date of publication of application: 02.05.2007
(73) Proprietor: Prato Verde Spa., 35020 Due Carrare (IT)
(72) Inventor: DORIGO, Gian, Domenico, I-35020 Due Carrare (IT)
(74) Representative: Vinci, Marcello
(86) International application number: PCT/IT2004/000448
(87) International publication number: WO 2006/013592

(56) References cited:
- US-A- 3 833 176
- US-A- 4 809 732
- US-A- 5 083 886
- US-A- 5 393 425

## Description

This patent relates to the field of fixed or underground irrigation systems for gardens and green areas, and in particular it concerns the supports/connectors that connects the surface irrigators with the underground pipelines for water distribution.

Underground irrigation systems for gardens and green areas, mainly comprising an underground pipeline for the distribution, many surface irrigators disposed at a suitable distance, and many supports/connectors for the connection of the underground pipelines with the surface irrigators, are known.

The surface irrigators are not visible, in fact at rest they are at the ground level, while when utilized (during irrigation) the central/upper part of the irrigator is pushed up, beyond the ground level, by the water under pressure.

As the depth of the laying underground of the pipelines for water distribution is not constant, it is necessary that the supports/connectors between pipelines and irrigators make up, in each case, for the different distances existing between the pipeline and the ground level.

Nowadays, in order to reach this aim, extensible supports/connectors are utilized; said supports/connectors are made of two cylindrical telescopic parts, one of which, the male, can be screwed in the other one, the female. The lower female part is connected to the underground pipeline, while the upper male part is connected to the irrigator. The adjustment of the level of the irrigator is performed by screwing and unscrewing the male part that rotates in the fixed female part.

US-A-4 809 732 discloses an extensible support comprising a female part with an internal thread and a male part with an external thread.

As the differences in the depth of the pipeline for water distribution can be considerable, for example due to the presence of underground obstacles or other causes, it is necessary to adjust the position of the two parts, the male and the female, for each single support/connector.

The thread of the two parts of the support/connector is of the standard metric type, that is with the section of the thread with inclined symmetrical flanks and with a relatively short pitch.

It follows that in order to extend or shorten each support/connector it is necessary to screw or unscrew for many turns one part in the other, with consequent time loss.

It is worth noting that the water pressure in the various points is comprised between 2 and 15 atmospheres, so all the various screwed parts must support said pressure and avoid water losses.

When it is necessary to open the support/connector for an occasional repair or internal cleaning it is necessary to completely unscrewed the male part from the female part and then screwing it again in its initial position.

In order to overcome to the above cited drawbacks a new extensible support for the connection between underground pipelines and surface irrigators of irrigation systems has been studied and carried out.

Aim of the new extensible support is to permit an easy and quick adjustment in order to place the irrigator at the correct height, or level.

Other aim of the new extensible support is to allow its fine adjustment for the extension and the shortening.

Other aim of the new extensible support is to guarantee in any case the seal to the pressure of the irrigation water.

These and other direct and complementary aims are achieved by the new extensible support that comprises a female part, fit for being connected in the lower part with the pipeline for the distribution of the water, an externally threaded male part fit for being connected in the upper part with the surface irrigator, a ring nut integral with the upper edge of the female part and provided in the internal part with a thread fit for coupling with the thread of the male part.

The thread of the male part has ratchet tooth section with the inclined surface facing down, that is opposite to the irrigator. The lower end of the male part is provided with gasket for the seal between the male part and the internal surface of the female part.

The thread of the ring nut is approximately extended for one or more turns, it has section shaped as an arched appendix facing down, and is flexible to the bottom.

It is possible to foresee that said thread of said ring nut is subdivided in two or more arched parts.

The ring nut is integral with the upper edge of the female part, for example by means of a bayonet blocking system.

The lower female part of the new extensible support is connected to the underground pipeline while the irrigator is screwed on the male part of the extensible support, so the irrigator and the male part of the support are pushed down until they approximately reach the desired height. With this movement the thread, integral with the female part, bends and while bending permits the passing through of the ratchet tooth thread of the male part.

The final adjustment of the irrigator, both for the lifting and for the lowering, is made by means of a simple screwing or unscrewing of the male part on the female part. With said movement the thread of the male part slides coupled with the thread of the ring nut of the female part.

When the pressure of the piping system rises, the water pushes up the nozzle that comes out while the thread of the ring nut of the female part holds the male part.

Extensible support for the connection between underground pipelines and surface irrigators for irrigation systems, comprising a generally cylindrical and hollow female part, fit for being connected in the lower part with the pipeline for the distribution of the water, and a cylindrical and hollow male part, fit for being connected in the upper part with the surface irrigator and provided with external thread that allows the coupling with the female part, the thread of which has arched appendix facing down and is flexible. Moreover the external thread of the male part has ratchet tooth section, the upper surface of which is generically perpendicular to the principal axis of the male part and the lower wall is inclined towards the lower end of said male part.

The characteristics of the new extensible support for the connection of underground pipelines and surface irrigators of irrigation systems will be clarified by the following description, referring to the figures attached as a non-limitative example.

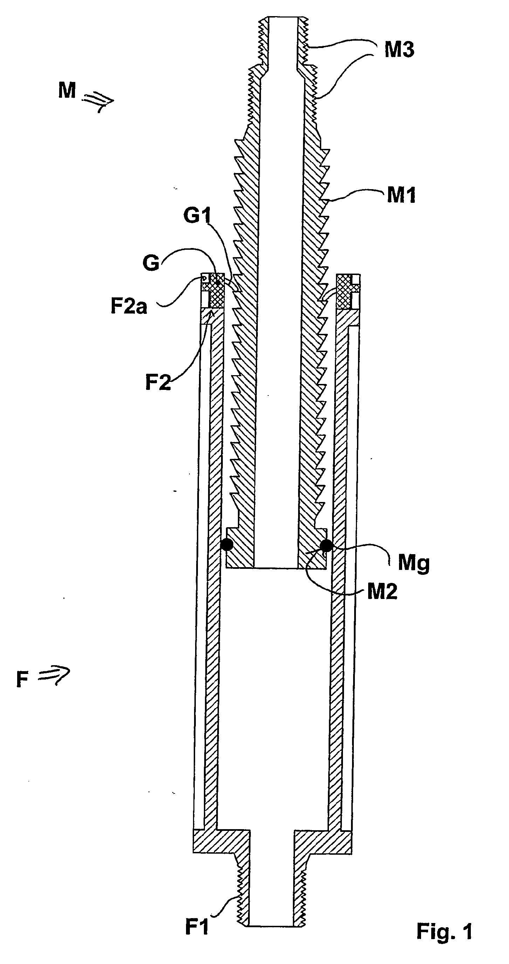

Figure 1 shows a vertical section of the new extensible support comprising a lower female part (F), an upper male part (M), a threaded ring nut (G) applied on the upper edge of the female part (F).

The female part (F) of the new extensible support is made of a generally cylindrical, hollow element, provided in the lower part with a thread (F1) or other appendix for the connection with the pipeline for the distribution of the water.

The upper edge (F2) of the female part (F) has attachment elements (F2a) fit for holding the ring nut (G).

The ring nut (G) is made of a ring element, fit for being applied and fixed on the upper edge of the female part (F), and provided on its internal surface with a thread (G1) extended approximately for one turn or one turn and a half.

Said thread (G1) of the ring nut (G) has section shaped as an arched appendix facing down and is flexible to the bottom.

It is possible to foresee that said thread (G1) is subdivided in two or more arched parts.

The male part (M) of the new extensible support is made of a cylindrical hollow element having in its upper part an appendix (M3) with more threaded portions with decreasing diameters fit for being connected with the surface irrigators.

The lower end of the male part (M) has a ring-shaped site (M2) fit for housing an annular gasket (Mg) for the seal.

The lateral surface of the male part (M) is threaded with ratchet tooth thread (M1). In particular the section of the external thread (M1) of the male part (M) has the upper surface (M1a) generally horizontal, that is perpendicular to the central axis of the male part (M), and the lower surface inclined.

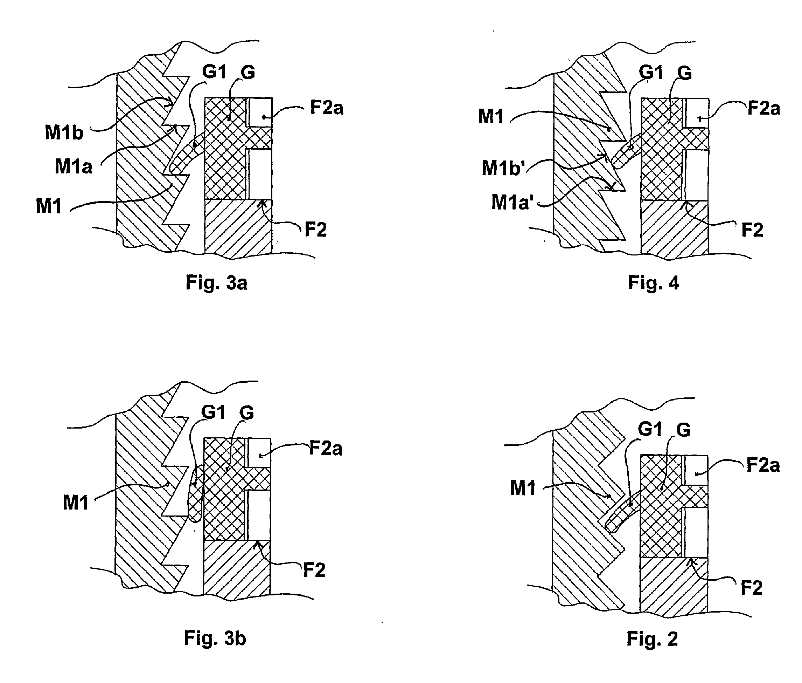

The thread (M1) of the male part (M) has diameter and pitch fit for coupling with the thread of the ring nut (G), as shown in figures 2, 3, 4.

The ring nut (G) is applied on the female part (F) and the male part (M) is inserted on the ring nut (G) and in the female part (F), as clearly visible in figure 1.

The new extensible support for the connection between underground pipelines and surface irrigators constituted as afore described is applied on the underground distribution pipeline with the male part (M) completely or for the major part extended over the female part (F).

The irrigator is united to the male part (M) by means of the new support, eventually cutting off the threaded union part (M3) with a too small diameter.

The adjustment of the position of the irrigator on the ground level is simply performed by pushing down the irrigator itself and the male part (M1) of the new support. In this way the thread (M1) of said male part (M) of the support bends the thread (G1) of the ring nut (G) allowing the penetration of the male part (M) into the female part (F). At every passage of a thread (M1) of the male part (M) on the thread (G1) of the ring nut (G), said thread of the ring nut (G) bends down and towards the internal part of the ring nut (G) itself, as visible in figure 3b, then elastically and automatically resuming the normal position represented in figure 3a.

The annular gasket (Mg) slides on the internal surface of the female part (F).

Possible adjustments of little heights, of lowering and lifting of the irrigator, are realized screwing and unscrewing the irrigator integral with the male part (M) on the ring nut (G) of the female part (F), as commonly done. During this movement the thread (M1) of the male part (M) slides on the thread (G1) of the ring nut (G) of the female part (F).

It is possible to foresee that the ratchet tooth thread (M1) of the male part is back-to-front, that is it has the lower surface (M1a) generically perpendicular to the principal axis of the male part (M) and the upper wall (M1b) inclined towards the upper end of said male part (M), as shown in figure 4.

It is also possible to foresee that the thread (M1) of the male part (M) has the upper and lower walls inclined and symmetrical, as shown in figure 2.

When the water under pressure flows in the new support and in the irrigator, the seal between the female part (F) and the male part (M) is guaranteed by the annular gasket (Mg) of the male part. The thrust to the top by the water exerted on the male part (M) is absorbed and opposed by the peculiar section of the thread (M1) of the male part (M) and by the thread (G1) of the ring nut (G). As a matter of fact the relief of the thread (G1) of the ring nut (G), is lifted being wedged between the walls (M1a, M1b) of the male part (M), holding it.

The ring nut (G) can be fixed to the upper edge (F2) of the female part (F) in any way, for example by means of a bayonet joint, or of a thread, and so on.

The above are the basic outlines of the invention, on the basis of which the technician will be able to provide for implementation; therefore any change that may be necessary upon implementation is to be regarded as completely protected by the present invention.

With reference to the above description the following claims are put forth.

## Claims

1. Extensible support for the connection between underground pipelines and surface irrigators of irrigation systems, comprising a generally cylindrical and hollow female part (F) provided in the internal part with thread (G1), fit for being connected in the lower part with the pipeline for the distribution of the water, and a cylindrical and hollow male part (M), fit for being connected in the upper part with the surface irrigator and provided with an external thread (M1) such to allow the coupling with the female part (F), **characterized in that** the thread (G1) of the female part (F) has section shaped as an arched appendix facing down, and is flexible.

2. Extensible support, as in claim 1, **characterized in that** the external thread (M1) of the male part (M) has ratchet tooth section (M1).

3. Extensible support, as in claim 1, **characterized in that** the external thread (M1) of the male part (M) has ratchet tooth section (M1) the upper surface (M1a) of which is generically perpendicular to the principal axis of the male part (M) and the lower wall (M1b) is inclined towards the lower end of said male part (M).

4. Extensible support, as in claim 1, **characterized in that** the external thread (M1) of the male part (M) has ratchet tooth section (M1) the upper surface of which (M1a') is generically perpendicular to the principal axis of the male part (M) and the upper wall (M1b') is inclined towards the upper end of said male part (M).

5. Extensible support, as in claim 1, **characterized in that** said thread (G2) of the female part is placed near to the upper edge (F2) of the female part (F).

6. Extensible support, as in claim 1, **characterized in that** said thread (G2) is placed on the internal surface of a removable ring nut (G) applied at the upper edge of the female part (F).

7. Extensible support, as in previous claims, **characterized in that** said thread (G1) is subdivided in one or more arched parts.

8. Extensible support, as in previous claims, **characterized in that** the lower end of the male part (M), resulting inside the female part (F), has an annular spline (M2) fit for housing an annular gasket (Mg) for the seal between said male part (M) and the internal surface of said female part (F).

9. Extensible support, as in previous claims, **characterized in that** the male part (M) has at one or at both ends an hexagonal site fit for allowing the screwing and the unscrewing of the male part (M) with a socket head screw or a similar tool.

## Patentansprüche

1. Verlängerbarer Träger für die Verbindung zwischen unterirdischen Rohrleitungen und Oberflächenberegnern von Bewässerungsanlagen, umfassend einen im Allgemeinen zylindrischen und hohlen Buchsenteil (F), der in seinem Innenabschnitt ein Gewinde (G1) aufweist und dazu geeignet ist, an seinem unteren Abschnitt mit der Rohrleitung zur Verteilung von Wasser verbunden zu werden, und einen zylindrischen und hohlen Steckerteil (M), der zu geeignet ist, an seinem oberen Abschnitt mit dem Oberflächenberegner verbunden zu werden und ein Außengewinde (M1) aufweist, um die Kopplung mit dem Buchsenteil (F) zu ermöglichen, **dadurch gekennzeichnet, dass** das Gewinde (G1) des Buchsenteils (F) einen Abschnitt aufweist, der zu einem bogenförmigen, nach unten weisenden Anhängsel geformt ist und biegsam ist.

2. Verlängerbarer Träger nach Anspruch 1, **dadurch gekennzeichnet, dass** das Außengewinde (M1) des Steckerteils (M) einen sägezahnförmigen Abschnitt (M1) aufweist.

3. Verlängerbarer Träger nach Anspruch 1, **dadurch gekennzeichnet, dass** das Außengewinde (M1) des Steckerteils (M) einen sägezahnförmigen Abschnitt (M1) aufweist, dessen obere Oberfläche (M1a) im Allgemeinen senkrecht zur Hauptachse des Steckerteils (M) steht und dessen untere Wand (M1b) zum unteren Ende des Steckerteils (M) hin geneigt ist.

4. Verlängerbarer Träger nach Anspruch 1, **dadurch gekennzeichnet, dass** das Außengewinde (M1) des Steckerteils (M) einen sägezahnförmigen Abschnitt (M1) aufweist, dessen obere Oberfläche (M1a') im Allgemeinen senkrecht zur Hauptachse des Steckerteils (M) steht und dessen obere Wand (M1b') zum oberen Ende des Steckerteils (M) hin geneigt ist.

5. Verlängerbarer Träger nach Anspruch 1, **dadurch gekennzeichnet, dass** das Gewinde (G2) des Buchsenteils in der Nähe des oberen Rands (F2) des Buchsenteils (F) angeordnet ist.

6. Verlängerbarer Träger nach Anspruch 1, **dadurch gekennzeichnet, dass** das Gewinde (G2) an der Innenoberfläche einer abnehmbaren Ringmutter (G) angeordnet ist, die am oberen Rand des Buchsenteils (F) angebracht ist.

7. Verlängerbarer Träger nach einem der vorangegangenen Ansprüche, **dadurch gekennzeichnet, dass** das Gewinde (G1) in einen oder mehrere bogenförmige Abschnitte unterteilt ist.

8. Verlängerbarer Träger nach einem der vorangegangenen Ansprüche, **dadurch gekennzeichnet, dass** das untere Ende des Steckerteils (M), das im Inneren des Buchsenteils (F) aufgenommen wird, eine ringförmige Rille (M2) aufweist, die dazu geeignet ist, eine ringförmige Dichtung (Mg) für die Abdichtung zwischen dem Steckerteil (M) und der Innenoberfläche des Buchsenteils (F) aufzunehmen.

9. Verlängerbarer Träger nach einem der vorangegangenen Ansprüche, **dadurch gekennzeichnet, dass** das Steckerteil (M) an einem oder an beiden Enden eine hexagonale Stelle aufweist, die dazu geeignet ist, das Aufschrauben und das Abschrauben des Steckerteils (M) mit einer Innensechskantschraube oder einem ähnlichen Werkzeug zu ermöglichen.

## Revendications

1. Support extensible pour la connexion entre des conduits souterrains et des irrigateurs de surface de systèmes d'irrigation, comprenant une partie femelle généralement cylindrique et creuse (F) dotée d'un filetage (G1) dans la partie intérieure, adaptée pour être reliée dans la partie inférieure au conduit pour la distribution de l'eau, et une partie mâle cylindrique et creuse (M), adpatée pour être reliée dans la partie supérieure à l'irrigateur de surface et dotée d'un filetage extérieur (M1) permettant l'accouplement avec la partie femelle (F), **caractérisé en ce que** le filetage (G1) de la partie femelle (F) présente une section ayant une forme d'appendice en arc tourné vers le bas, et est flexible.

2. Support extensible, selon la revendication 1, **caractérisé en ce que** le filetage extérieur (M1) de la partie mâle (M) présente une section à dent triangulaire (M1).

3. Support extensible, selon la revendication 1, **caractérisé en ce que** le filetage extérieur (M1) de la partie mâle (M) présente une section à dent triangulaire (M1) dont la surface supérieure (M1a) est généralement perpendiculaire à l'axe principal de la partie mâle (M) et la paroi inférieure (M1b) est inclinée vers l'extrémité inférieure de ladite partie mâle (M).

4. Support extensible, selon la revendication 1, **caractérisé en ce que** le filetage extérieur (M1) de la partie mâle (M) présente une section à dent triangulaire (M1) dont la surface supérieure (M1a') est généralement perpendiculaire à l'axe principal de la partie mâle (M) et la paroi supérieure (M1b') est inclinée vers l'extrémité supérieure de ladite partie mâle (M).

5. Support extensible, selon la revendication 1, **caractérisé en ce que** ledit filetage (G2) de la partie femelle est positionné près du bord supérieur (F2) de la partie femelle (F).

6. Support extensible, selon la revendication 1, **caractérisé en ce que** ledit filetage (G2) est positionné sur la surface intérieure d'un écrou à oeil amovible (G) appliqué sur le bord supérieur de la partie femelle (F).

7. Support extensible, selon les revendications précédentes, **caractérisé en ce que** ledit filetage (G1) est subdivisé en une ou plusieurs parties en arc.

8. Support extensible, selon les revendications précédentes, **caractérisé en ce que** l'extrémité inférieure de la partie mâle (M), accueillie à l'intérieur de la partie femelle (F), présente une cannelure annulaire (M2) adaptée pour loger un joint annulaire (Mg) apte à pour réaliser l'étanchéité entre ladite partie mâle (M) et la surface intérieure de ladite partie femelle (F).

9. Support extensible, selon les revendications précédentes, **caractérisé en ce que** la partie mâle (M) présente sur une ou les deux extrémités une zone hexagonale adaptée pour permettre le vissage et dévissage de la partie mâle (M) à l'aide d'une vis à tête creuse ou d'un outil similaire.
